# EUROPÄISCHE PATENTANMELDUNG

(11) **EP 4 706 463 A1**
(43) Veröffentlichungstag der Anmeldung: **11.03.2026**
(21) Anmeldenummer: 25188938.2
(22) Anmeldetag: 11.07.2025
(51) Int. Cl.: A47J 31/44

(54) **VERFAHREN ZUM VORWÄRMEN EINER BRÜHEINHEIT EINES KAFFEEAUTOMATEN SOWIE KAFFEEAUTOMAT UND COMPUTERPROGRAMMPRODUKT**

(30) Priorität: 04.09.2024 DE 102024208416
(71) Anmelder: BSH Hausgeräte GmbH, 81739 München (DE)
(72) Erfinder: Nerbl, Christian, 83512 Wasserburg am Inn (DE); Frank, Theresa, 83308 Trostberg (DE); Daburger, Josef, 83313 Siegsdorf (DE)

(57) **Zusammenfassung**

Die Erfindung betriff ein Verfahren zum Vorwärmen einer Brüheinheit (2) eines Kaffeeautomaten (1), insbesondere bei einem Einschaltvorgang des Kaffeeautomaten (1), wobei die Brüheinheit (2) einen Brühkolben und eine relativ zum Brühkolben bewegliche Brühkammer aufweist und wobei der Brühkolben mittels einer Dichtung die Brühkammer, insbesondere fluiddicht, abschließen kann, umfassend die Schritte:
a) Verschließen der Brühkammer durch den Brühkolben mittels der Dichtung, insbesondere durch eine Relativbewegung der Brühkammer und des Brühkolbens zueinander, und anschließend
b) Einleiten eines Vorwärmfluids in die durch den Brühkolben mittels der Dichtung verschlossene Brühkammer, und anschließend
c) Verschlossen halten der Brühkammer bis zu einem Getränkebezugssignal oder einem Ausschaltsignal zum Ausschalten des Kaffeeautomaten (1).

Die Erfindung betrifft auch einen entsprechend eingerichteten und programmierten Kaffeeautomaten (1) und ein entsprechendes Computerprogramm[produkt] umfassend dementsprechende Befehle.

## Beschreibung

Die vorliegende Anmeldung betrifft ein Verfahren zum Vorwärmen einer Brüheinheit eines Kaffeeautomaten, insbesondere bei einem Einschaltvorgang des Kaffeeautomaten, wobei die Brüheinheit einen Brühkolben und eine relativ zum Brühkolben bewegliche Brühkammer aufweist und wobei der Brühkolben mittels einer Dichtung die Brühkammer, insbesondere fluiddicht, abschließen kann sowie einen dementsprechenden Kaffeeautomaten und ein diesbezügliches Computerprogrammprodukt.

Es ist z.B. aus der DE102019206635 A1 bekannt, dass beim Einschalten eines Kaffeeautomaten ein Einschaltspülvorgang durchgeführt wird, um eine Brüheinheit und Leitungen zu spülen, jedoch auch gelichzeitig vorzuwärmen. Dabei wird üblicherweise eine Brühkammer der Brüheinheit erst verschlossen, dann mit erwärmtem Spülwasser beaufschlagt, und anschließend am Ende des Einschaltspülvorgangs wieder geöffnet und das Spülwasser dabei abgelassen. Mit dem Öffnen und Ablassen wird die vorgewärmte Brühkammer z.B. für einen nachfolgenden Getränkebezug in eine Beladeposition zur Aufnahme von Kaffeepulver aus einem Mahlwerk verbracht. Das erfolgt grundsätzlich schnellstmöglich, sobald ein entsprechendes Vorwärmen erreicht ist, um so schnell wie möglich den ersten Getränkebezug zu ermöglichen, z.B. nach einer festgelegten Zeit oder beim Überscheiten eines anderen Messwerts wie z.B. einer Zieltemperatur. Dies folgt dem allgemein üblichen Grundsatz die Brüheinheit bei jedem Prozess so schnell wie möglich wieder in die Beladeposition für den nächsten Getränkebezug zu verbringen, um den nächsten Getränkebezug so schnell wie möglich anbieten zu können.

Jedoch neigen viele Bedienpersonen dazu, nach dem Einschalten eines Kaffeeautomaten zwischenzeitlich einer anderen Tätigkeit nachzugehen um die Zeit des Einschaltspülvorgang anderweitig zu nutzen. Diese Tätigkeiten dauern jedoch häufig z.B. länger als gedacht oder angenommen. Oft erfolgt daher der erste Getränkebezug tatsächlich erst Minuten nach dem Ende des Einschaltspülvorgangs. Eine Wiederholung der Vorwärmvorgang am Anfang der Getränkebezüge würde jedoch zu einem - ggf. weiniger nachhaltigem - erhöhten Energieverbrauch führen.

Ebenso erfolgt, insbesondere bei einer längeren verstrichenen Zeit zwischen zwei Getränkebezügen, eine Abkühlung der direkt nach dem Getränkebezug geöffneten Brüheinheit.

Aufgabe der vorliegenden Erfindung ist es daher, die genannten Nachteile zu verbessern, insbesondere ein effektiveres Vorwärmen einer Brüheinheit zu ermöglichen.

Diese Aufgabe wird gelöst durch ein Verfahren nach Anspruch 1, durch einen Kaffeeautomaten nach Anspruch 9 und durch ein Computerprogrammprodukt nach Anspruch 10. Vorteilhafte Weiterbildungen sind Gegenstand der abhängigen Ansprüche.

Das erfindungsgemäße Verfahren zum Vorwärmen einer Brüheinheit eines Kaffeeautomaten, insbesondere bei einem Einschaltvorgang des Kaffeeautomaten, wobei die Brüheinheit einen Brühkolben und eine relativ zum Brühkolben bewegliche Brühkammer aufweist und wobei der Brühkolben mittels einer Dichtung die Brühkammer, insbesondere fluiddicht, abschließen kann. Erfindungsgemäß umfasst dieses Verfahren die Schritte:
a) Verschließen der Brühkammer durch den Brühkolben mittels der Dichtung, insbesondere durch eine Relativbewegung der Brühkammer und des Brühkolbens zueinander, und anschließend
b) Einleiten eines Vorwärmfluids in die durch den Brühkolben mittels der Dichtung verschlossene Brühkammer, und anschließend
c) Verschlossen halten der Brühkammer bis zu einem Getränkebezugssignal oder einem Ausschaltsignal zum Ausschalten des Kaffeeautomaten.

Das erfindungsgemäße Verfahren beruht auf dem allgemeinen Gedanken, entgegen dem allgemeinen Bestreben so schnell wie möglich den ersten/nächsten Getränkebezug zu ermöglichen die in die Brühkammer eingebrachte Vorwärmenergie so vollständig und lange wie möglich auszunutzen. Dies wird dadurch erreicht, dass die Brühkammer nach dem Einleiten des Vorwärmfluids bis zu einem Getränkebezugssignal oder einem Ausschaltsignal zum Ausschalten des Kaffeeautomaten verschlossen gehalten wird, d.h. so lange wie möglich bis zu einem tatsächlichen angeforderten Getränkebezug oder Ausschaltsignal. Dadurch kann verhindert werden, dass die eingebrachte Vorwärmenergie nicht vorzeitig oder ungenutzt z.B. durch die wieder freigegebene Pulvereinfüllöffnung der Brühkammer entweicht. Insbesondere bei einem Einschaltvorgang des Kaffeeautomaten kann dadurch selbst dann verhindert werden, dass die eingebrachte Energie ungenutzt freigegeben wird, wenn nach dem Einschalten des Kaffeeautomaten zwischenzeitlich einer anderen Tätigkeit nachgegangen wird. Somit wird ein effektives Vorwärmen der Brüheinheit und auch ein besonders nachhaltiger Betrieb des Kaffeeautomaten ermöglicht.

Bei einer vorteilhaften Weiterbildung des erfindungsgemäßen Verfahrens wird das Getränkebezugssignal oder das Ausschaltsignal durch eine Nutzerbetätigung einer Getränkezubereitungsfunktion oder einer manuell oder automatisch ausgelösten Ausschaltfunktion ausgelöst. Dadurch kann die Brühkammer mit dem Vorwärmfluid so lange geschlossen gehalten werden, bis ein tatsächlich angeforderter Getränkebezug oder ein Ausschaltsignal anderes erfordert. Als Getränkezubereitungsfunktion kann dabei vorteilhaft für eine maximale Ausnutzung ein tatsächliches Starten des Geträkebezugs erfasst und/oder herangezogen werden. Auch kann, vorteilhaft für eine dennoch vorausschauende Prozessführung, bereits eine Getränkevorauswahl, oder eine Benutzerumstellung, oder eine andere Benutzeraktion die in Zusammenhang mit einem Getränkebezug erfolgen, als Getränkezubereitungsfunktion erfasst und/oder herangezogen werden.

Bei einer weiteren vorteilhaften Weiterbildung des erfindungsgemäßen Verfahrens erfolgt durch das Getränkebezugssignal oder das Ausschaltsignal ein Öffnen einer Vorwärmfluidauslassöffnung vor dem Beginn eines Kaffeepulverzuführvorgangs oder eines Ausschaltvorgangs. Dadurch kann beispielsweise ein flüssiger Anteil des Vorwärmfluids, oder zumindest ein Teil davon, vor Beginn der Kaffeepulverzuführung aus der Brühkammer entfernt werden, ohne dass hierdurch bereits zu viel der eingebrachten Vorwärmenergie vorzeitig oder ungenutzt freigegeben wird.

Bei einer weiteren vorteilhaften Weiterbildung des erfindungsgemäßen Verfahrens löst nur das Getränkebezugssignal ein Öffnen der Brühkammer für eine Befüllung mit Kaffeepulver für den signalisierten Getränkebezug, insbesondere nach einem Reststoffausgabeschritt, aus. Dadurch kann ausgeschlossen werden, dass ein anderer Umstand oder ein anders Signal, z.B. ein Einschaltspülprozess-Ende oder ein Milchschaumbezug (oder -Ende), das Öffnen der Brühkammer für eine Befüllung mit Kaffeepulver früher veranlasst als unbedingt nötig. Somit kann verhindert werden, dass hierdurch bereits zu viel der eingebrachten Vorwärmenergie vorzeitig oder ungenutzt freigegeben wird.

Bei einer weiteren vorteilhaften Weiterbildung des erfindungsgemäßen Verfahrens umfasst das in die verschlossene Brühkammer eingeleitete Vorwärmfluid erhitztes Wasser. Wasser, hier z.B. erhitztes Wasser, kann in der Flüssigphase die Vorwärmenergie lange in der Brüheinheit halten. Dadurch kann insbesondere eine lange anhaltende Vorwärmung erreicht werden.

Bei einer weiteren vorteilhaften Weiterbildung des erfindungsgemäßen Verfahrens umfasst das in die verschlossene Brühkammer eingeleitete Vorwärmfluid Wasserdampf. Wasserdampf, hier z.B. bis zur Gasphase erhitztes Wasser, kann eine besonders effektive und schnelle Vorwärmung der Brüheinheit ermöglichen. Dadurch kann insbesondere eine schnelle und sehr effektive Vorwärmung erreicht werden.

Eine Kombination der beiden vorhergehenden Weiterbildungen, wonach das eingeleitete Vorwärmfluid sowohl erhitztes Wasser als auch Wasserdampf umfasst, ermöglicht dabei einen weit über die reine Kombination der genannten Einzelvorteile hinausgehenden Bonuseffekt. Denn es kann nicht nur eine gleichermaßen schnelle und sehr effektive und dennoch lange anhaltende Vorwärmung erreicht werden, sondern dies auch mit einem deutlich verringerten Energieeinsatz erreicht werden. Es kann ein einfacher Dampfprozess durchfahren werden, bei dem nicht durch hohen Energieeinsatz schon am Anfang Trockendampf erzeugt werden muss. Gleichermaßen kann bereits in einer Zuleitung zwischen einer Heizeinrichtung und der Brüheinheit befindliches Wasser durch den erzeugten Dampf auf dem Weg in die Brüheinheit aufgewärmt werden und muss nicht oder zumindest nicht in großer Menge vorab in eine Abtropfschale des Kaffeeautomaten geleitet werden. So kann einerseits die Menge an Wasser reduziert werden, die bei dem Vorwärmen der Brüheinheit in die Tropfschale gelangt und dadurch deren ausleeren weniger häufig nötig werden und andererseits dies bei geringerem Energie- und Wassereinsatz erreicht werden. Somit wird ein besonders effektives Vorwärmen der Brüheinheit ermöglicht.

Bei einer weiteren vorteilhaften Weiterbildung des erfindungsgemäßen Verfahrens erfolgt beim Einleiten des Vorwärmfluids in die durch den Brühkolben mittels der Dichtung verschlossene Brühkammer das Verschließen derart, dass ein durch das Einleiten des Vorwärmfluids entstehender Überdruck verhindert oder abgebaut werden kann, insbesondere dadurch, dass die Relativbewegung der Brühkammer und des Brühkolbens zueinander beim Einleiten soweit erfolgt, dass die Dichtung zumindest teilweise zum Anliegen, jedoch nicht zu vollständig fluiddichten Abschließen gebracht wird und insbesondere direkt nach dem Einleiten dann zum zu vollständig fluiddichten Abschließen gebracht wird. Das kann erreicht werden, indem die Brühkammer verschlossen, jedoch nicht hermetisch fluiddicht verschlossen wird. Dadurch kann mehr Vorwärmfluid und somit auch eine größere Energiemenge in die Brüheinheit eingeleitet werden, was besonders bei Wasserdampf umfassendem Vorwärmfluid sehr vorteilhaft sein kann. Auch dadurch kann ein besonders effektives Vorwärmen der Brüheinheit ermöglicht werden.

Bei einer weiteren vorteilhaften Weiterbildung des erfindungsgemäßen Verfahrens wird durch das Einleiten des Vorwärmfluids ein Energiebetrag von 15.000 bis 25.000 Joule, insbesondre 20.000 Joule, in die Brühkammer eingeleitet. Ein Energiebetrag von 15.000 bis 25.000 Joule (entspricht in etwa dem Brennwert einer frischen Erdbeere) kann mittels des erfindungsgemäßen Verfahrens ein besonders effektives Vorwärmen gängiger Brüheinheit gängiger Kaffeeautomaten ermöglichen. Bei 15.000 Joule können kleinere Brüheinheiten besonders effektiv oder größere Brüheinheiten besonders Wasser- und Stromsparend vorgewärmt werden. Bei 25.000 Joule können größere Brüheinheiten besonders effektiv oder annähernd alle Brüheinheiten dennoch sparsam auf eine besonders hohe Vorwärmtemperatur gebracht werden. Bei 20.000 Joule können mit dem genannten Verfahren alle gängigen Brüheinheiten ausreichend und gleichermaßen auf eine besonders nachhaltige Weise vorgewärmt werden.

Eine Lösung der eingangs genannten Aufgabe wird auch bereitgestellt durch einen Kaffeeautomaten mit einer Brüheinheit, die einen Brühkolben und eine relativ zum Brühkolben bewegliche Brühkammer aufweist, wobei der Brühkolben mittels einer Dichtung die Brühkammer, insbesondere fluiddicht, abschließen kann, dadurch gekennzeichnet, dass der Kaffeeautomat eingerichtet und programmiert ist, die Schritte des vorhergehend beschriebenen Verfahrens durchzuführen d.h. des erfindungsgemäßen Verfahrens, ggf. auch mit den entsprechenden Weiterbildungen. Dadurch kann verhindert werden, dass die eingebrachte Vorwärmenergie vorzeitig oder ungenutzt z.B. durch die wieder freigegebene Pulvereinfüllöffnung der Brühkammer entweicht. Somit wird ein effektives Vorwärmen der Brüheinheit und auch ein besonders nachhaltiger Betrieb des Kaffeeautomaten ermöglicht.

Eine Lösung der eingangs genannten Aufgabe wird auch bereitgestellt durch ein Computerprogramm[produkt], umfassend Befehle, die bei der Ausführung des Programms durch den Kaffeeautomaten diesen veranlassen, die Schritte des hier beschriebenen Verfahrens durchzuführen, d.h. des erfindungsgemäßen Verfahrens, ggf. auch mit den entsprechenden Weiterbildungen. Dadurch wird nicht nur ein effektives Vorwärmen der Brüheinheit und auch ein besonders nachhaltiger Betrieb des Kaffeeautomaten ermöglicht. Vielmehr können beispielsweise auch bereits ausgelieferte Kaffeeautomaten mit entsprechenden Einrichtungen jedoch ohne entsprechender Programmierung sehr einfach über ein Firmware-Update oder eine entsprechende App mittels einer Internetverbindung entsprechend programmiert werden. Dadurch kann auch eine besonders nachhaltige Lösung der eingangs genannten Aufgabe bereitgestellt werden.

Im Folgenden wird das Prinzip der Erfindung anhand einer Zeichnung beispielhaft noch näher erläutert. In der Zeichnung zeigt die einzige Figur:

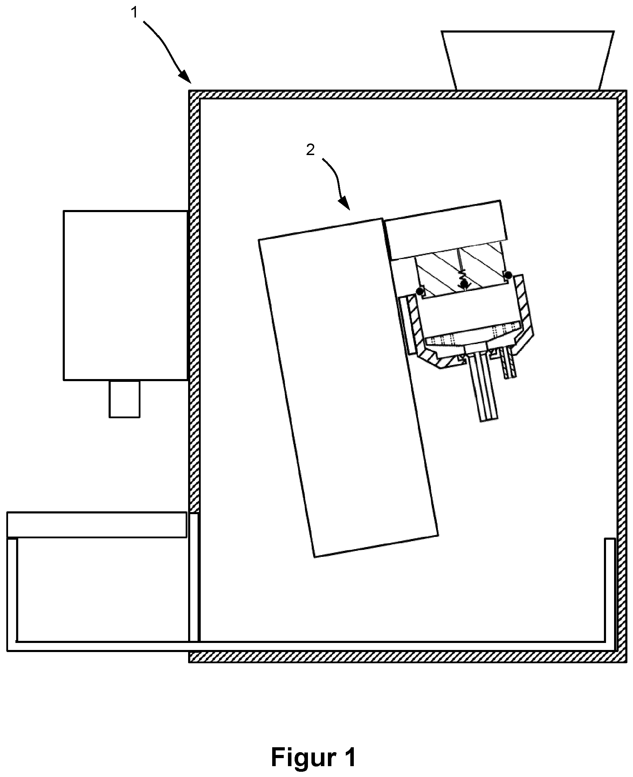

- Fig. 1:: eine schematische Darstellung eines Kaffeeautomaten mit einer Brüheinheit bei einem Vorwärmen einer Brüheinheit, in der Seitenansicht im Teilschnitt.

In Figur 1 ist ein Kaffeeautomat 1 mit einer Brüheinheit 2 bei einem Einschaltvorgang des Kaffeeautomaten 1 dargestellt, wobei die Brüheinheit 2 einen Brühkolben und eine relativ zum Brühkolben bewegliche Brühkammer aufweist. Der Brühkolben kann mittels einer Dichtung die Brühkammer zwar fluiddicht abschließen. Jedoch ist in der dargestellten Stellung jedoch die Brühkammer nicht hermetisch fluiddicht abgeschlossen, sondern die Dichtung nur zum Anliegen gebracht, womit das Verschließen derart erfolgt, dass ein durch das Einleiten des Vorwärmfluids ansonsten entstehender Überdruck verhindert oder zumindest abgebaut werden kann. Somit führt der Kaffeeautomat 1 mit der Brüheinheit 2 bei dem Einschaltvorgang ein Verfahren mit folgenden Schritten aus:
a) Verschließen der Brühkammer durch den Brühkolben mittels der Dichtung durch eine Relativbewegung der Brühkammer und des Brühkolbens zueinander in die in Figur 1 dargestellte Position, und anschließend
b) Einleiten eines Vorwärmfluids in die durch den Brühkolben mittels der Dichtung, wenn auch nicht hermetisch fluiddicht, verschlossene Brühkammer, und anschließend
c) Verschlossen halten der Brühkammer bis zu einem Getränkebezugssignal oder einem Ausschaltsignal zum Ausschalten des Kaffeeautomaten 1.

Dadurch kann ein besonders effektives Vorwärmen der Brüheinheit 2 ermöglicht. Das Einleiten des Vorwärmfluids kann über den unten rechts an der Brühkammer erkennbaren Fluideinlass erfolgen. Dieser Kann durch eine nicht dargestellte Zuleitung zwischen einer Heizeinrichtung und der Brüheinheit 2 mit dem in der Heizeinrichtung vorgewärmten Vorwärmfluid beaufschlagt werden. Dieser Fluideinlass kann absperrbar sein. Beim hier beschriebenen Verfahren erfolgt in Schritt b) ein Einleiten eines Vorwärmfluids, das Wasser und Wasserdampf umfasst womit ein Energiebetrag 20.000 Joule, in die bereits gemäß Schritt a) verschlossene Brühkammer eingeleitet wird. Anschließend wird gemäß Schritt c) die Brühkammer verschlossen gehalten, bis zu einem Getränkebezugssignal oder einem Ausschaltsignal zum Ausschalten des Kaffeeautomaten 1.

Im vorliegenden Beispiel wird das das Getränkebezugssignal oder das Ausschaltsignal durch eine Nutzerbetätigung einer Getränkezubereitungsfunktion bzw. einer manuell oder automatisch ausgelösten Ausschaltfunktion ausgelöst. Daher wird auch bei einem Ausschalten des Kaffeeautomaten 1 die Brühkammer wieder geöffnet. Gleichermaßen erfolgt im vorliegenden Beispiel durch das Getränkebezugssignal ein Öffnen einer Vorwärmfluidauslassöffnung vor dem Beginn eines nicht dargestellten Kaffeepulverzuführvorgangs, durch kurzzeitiges minimales Anheben eines unten in der Brühkammer mittig dargestellten T-förmigen Pulververpresskolbens gegenüber einem, seinen Schaft umgebenden, Lippendichtring. Bis zu einem Getränkebezug kann nur das Getränkebezugssignal ein Öffnen der Brühkammer für eine Befüllung mit Kaffeepulver für den signalisierten Getränkebezug, insbesondere nach einem Reststoffausgabeschritt, auslösen. Somit kann die Brühkammer mit dem Vorwärmfluid so lange geschlossen gehalten werden, bis ein tatsächlich angeforderter Getränkebezug oder ein Ausschaltsignal anderes erfordert. Dadurch kann ein besonders effektives Vorwärmen der Brüheinheit 2 ermöglicht werden.

Im vorliegenden Beispiel wurde eine nicht dargestellte Steuervorrichtung des Kaffeeautomaten 1 entsprechend programmiert, indem über eine nicht dargestellte Internetschnittstelle mittels einer nicht dargestellten App ein Computerprogramm[produkt] implementiert wurde, umfassend Befehle, die bei der Ausführung des Programms durch die Steuervorrichtung des Kaffeeautomaten 1 diesen veranlasst, die Schritte des hier beschriebenen Verfahrens durchzuführen. Dadurch wird auch eine besonders nachhaltige Lösung der eingangs genannten Aufgabe bereitgestellt.

Die im Ausführungsbeispiel dargestellten Bestandteile wie z. B. die Brüheinheit 2 und insbesondere die Brühkammer und der Brühkolben sowie deren Größenverhältnisse zueinander sind grundsätzlich nicht als maßstabsgerecht anzusehen. Vielmehr können einzelne Elemente wie beispielsweise die Brühkammer und der Brühkolben zur besseren Darstellbarkeit und/oder zum besseren Verständnis übertrieben dick oder groß dimensioniert dargestellt sein. Die Erläuterung des erfindungsgemäßen Kaffeeautomaten 1 anhand der beschriebenen Ausführungsbeispiele ist nicht als Beschränkung der Erfindung auf diese zu betrachten. Vielmehr umfasst die Erfindung jedes neue Merkmal sowie jede Kombination von Merkmalen, auch wenn dieses Merkmal oder diese Kombination selbst nicht explizit in den Ansprüchen oder dem Ausführungsbeispiel angegeben ist.

### BEZUGSZEICHENLISTE

- 1: Kaffeeautomat
- 2: Brüheinheit

## Patentansprüche

1. Verfahren zum Vorwärmen einer Brüheinheit (2) eines Kaffeeautomaten (1), insbesondere bei einem Einschaltvorgang des Kaffeeautomaten (1), wobei die Brüheinheit (2) einen Brühkolben und eine relativ zum Brühkolben bewegliche Brühkammer aufweist und wobei der Brühkolben mittels einer Dichtung die Brühkammer, insbesondere fluiddicht, abschließen kann, umfassend die Schritte:
a) Verschließen der Brühkammer durch den Brühkolben mittels der Dichtung, insbesondere durch eine Relativbewegung der Brühkammer und des Brühkolbens zueinander, und anschließend
b) Einleiten eines Vorwärmfluids in die durch den Brühkolben mittels der Dichtung verschlossene Brühkammer, und anschließend
c) Verschlossen halten der Brühkammer bis zu einem Getränkebezugssignal oder einem Ausschaltsignal zum Ausschalten des Kaffeeautomaten (1).

2. Verfahren nach Anspruch 1, **dadurch gekennzeichnet, dass** das Getränkebezugssignal oder das Ausschaltsignal durch eine Nutzerbetätigung einer Getränkezubereitungsfunktion oder einer manuell oder automatisch ausgelösten Ausschaltfunktion ausgelöst wird.

3. Verfahren nach Anspruch 1 oder 2, **dadurch gekennzeichnet, dass** durch das Getränkebezugssignal oder das Ausschaltsignal ein Öffnen einer Vorwärmfluidauslassöffnung vor dem Beginn eines Kaffeepulverzuführvorgangs oder eines Ausschaltvorgangs erfolgt.

4. Verfahren nach einem der Ansprüche 1 bis 3, **dadurch gekennzeichnet, dass** nur das Getränkebezugssignal ein Öffnen der Brühkammer für eine Befüllung mit Kaffeepulver für den signalisierten Getränkebezug, insbesondere nach einem Reststoffausgabeschritt, auslöst.

5. Verfahren nach einem der Ansprüche 1 bis 4, **dadurch gekennzeichnet, dass** das in die verschlossene Brühkammer eingeleitete Vorwärmfluid erhitztes Wasser umfasst.

6. Verfahren nach einem der Ansprüche 1 bis 5, **dadurch gekennzeichnet, dass** das in die verschlossene Brühkammer eingeleitete Vorwärmfluid Wasserdampf umfasst.

7. Verfahren nach Anspruch 6, **dadurch gekennzeichnet, dass** beim Einleiten des Vorwärmfluids in die durch den Brühkolben mittels der Dichtung verschlossene Brühkammer das Verschließen derart erfolgt, dass ein durch das Einleiten des Vorwärmfluids entstehender Überdruck verhindert oder abgebaut werden kann, insbesondere dadurch, dass die Relativbewegung der Brühkammer und des Brühkolbens zueinander beim Einleiten soweit erfolgt, dass die Dichtung zumindest teilweise zum Anliegen, jedoch nicht zu vollständig fluiddichten Abschließen gebracht wird und insbesondere direkt nach dem Einleiten dann zum zu vollständig fluiddichten Abschließen gebracht wird.

8. Verfahren nach einem der Ansprüche 1 bis 7, **dadurch gekennzeichnet, dass** durch das Einleiten des Vorwärmfluids ein Energiebetrag von 15.000 bis 25.000 Joule, insbesondre 20.000 Joule, in die Brühkammer eingeleitet wird.

9. Kaffeeautomat (1), mit einer Brüheinheit, die einen Brühkolben und eine relativ zum Brühkolben bewegliche Brühkammer aufweist, wobei der Brühkolben mittels einer Dichtung die Brühkammer, insbesondere fluiddicht, abschließen kann, **dadurch gekennzeichnet, dass** der Kaffeeautomat (1) eingerichtet und programmiert ist, die Schritte des Verfahrens gemäß einem der Ansprüche 1 bis 8 durchzuführen.

10. Computerprogramm[produkt], umfassend Befehle, die bei der Ausführung des Programms durch den Kaffeeautomaten (1) den Kaffeeautomaten (1) veranlassen, die Schritte des Verfahrens gemäß einem der Ansprüche 1 bis 8 durchzuführen.
